# EUROPÄISCHE PATENTSCHRIFT

(11) **EP 1 481 218 B1**
(45) Veröffentlichungstag und Bekanntmachung des Hinweises auf die Patenterteilung: **19.12.2012**
(21) Anmeldenummer: 03732267.4
(22) Anmeldetag: 14.03.2003
(51) Int. Cl.: G01B 11/24, G01B 11/00

(54) **ANORDNUNG UND VERFAHREN ZUM MESSEN VON GEOMETRIEN VON IM WESENTLICHEN ZWEIDIMENSIONALEN OBJEKTEN**
DEVICE AND METHOD FOR MEASURING GEOMETRIES OF ESSENTIALLY TWO-DIMENSIONAL OBJECTS
DISPOSITIF ET PROCEDE DE MESURE DES GEOMETRIES D'OBJETS ESSENTIELLEMENT BIDIMENSIONNELS

(30) Priorität: 14.03.2002 DE 10211760
(43) Veröffentlichungstag der Anmeldung: 01.12.2004
(73) Patentinhaber: Werth Messtechnik GmbH, 35394 Giessen (DE)
(72) Erfinder: CHRISTOPH, Ralf, 35394 Giessen (DE)
(74) Vertreter: Stoffregen, Hans-Herbert
(86) Internationale Anmeldenummer: PCT/EP2003/002719
(87) Internationale Veröffentlichungsnummer: WO 2003/076871

(56) Entgegenhaltungen:
- EP-A2- 0 967 505
- WO-A1-89/10036
- DE-U- 8 802 791
- DE-U1- 20 017 739
- US-A- 4 092 669
- US-A- 4 899 296
- US-A- 5 786 897
- "FERTIGUNGSMESSTECHNIK", 31 December 1984 (1984-12-31), H.-J. WARNECKE AND W. DUTSCHKE, BERLIN ISBN: 3-540-11784-9 * Kapitel 7.2.10 OPTISCHE KOORDINATENMESSGERÄTE, Seiten 292-294 *

## Beschreibung

Die Erfindung bezieht sich auf ein Koordinatenmessgerät zum Messen von Geometrien bzw. Strukturen von im Wesentlichen zweidimensionalen Objekten. Ferner nimmt die Erfindung Bezug auf ein Verfahren zum Messen von Kanten, Ecken und/oder Rändern von einem im Wesentlichen zweidimensionalen Objekt mittels eines Koordinatenmessgerätes unter Verwendung einer Bildverarbeitungssensorik.

Zum Messen der Geometrie von überwiegend zweidimensionalen Objekten wie Werkstücken oder -zeugen, insbesondere zur messtechnischen Erfassung von Qualitätsmerkmalen, werden vorzugsweise Koordinatenmessgeräte mit Bildverarbeitungssensorik wie CCD-Kameras eingesetzt. Diese Geräte sind üblicherweise so aufgebaut, dass das zu messende Objekt von unten beleuchtet wird, mittels eines Kreuztisches bewegt wird und interessierende Messobjektstrukturen von oben mit einem Bildverarbeitungssensor gemessen werden. Der Nachteil des beschriebenen Konstruktionsprinzips besteht darin, dass bei unterschiedlich dicken Objekten der Bildverarbeitungssensor nachfokussiert werden muss. Das ebenfalls beim Auftreten kleinster Höhenstufungen am Objekt erforderliche Nachfokussieren verzögert den Messablauf.

Es ist weiterhin üblich, die Bildverarbeitungssensorik zum Messen bestimmter Merkmale an dem jeweitigen Ort des Merkmals zu positionieren, sodann die Werkstückkonturen aufzunehmen und später zu berechnen. Ein Gesamtüberblick des Messobjektes wird somit nicht gewonnen.

Ferner werden einzelne Bereiche des Messobjektes mehrfach angefahren, um nahe beieinander liegende Merkmale nacheinander aufzunehmen. Dies führt ebenfalls zur Verlängerung der Messzeit.

Es sind auch sogenannte Scannersysteme bekannt, bei denen mit zeilenförmigen Sensoren größere Abschnitte eines Bereiches abgescannt werden. Der Nachteil solcher Systeme liegt darin, dass die Bildinformation aus einer linearen Scannbewegung in einer ersten Richtung und der Sensorgeometrie in einer zweiten Richtung zusammengefügt werden. Die spezielle Geometrie der Sensorik erfordert ebenfalls Abbildungsoptiken, die grundsätzlich eine hochwertige Abbildung nicht zulassen. Im Ergebnis sind die nach diesem Prinzip hergestellten Messgeräte nur mit einer geringen Genauigkeit ausgestattet.

Typischerweise gelangen entsprechende zeilenförmige Sensoren bei Dokumentenscanner zum Einsatz. Insoweit wird beispielhaft auf die EP-A-0 967 505 oder die WO-A-89/10036 verwiesen.

Ein gattungsgemäßes Koordinatenmessgerät ist dem DE-U-200 17 739 zu entnehmen. Um ein Objekt von zwei Seiten gleichzeitig zu messen, sind in einer Linie ausgerichtet oberhalb und unterhalb des Objektes jeweils eine Kamera angeordnet. Jede Kamera verfügt über ein eigenes Beleuchtungssystem, so dass das Objekt im Auflicht und im Durchlicht beleuchtet werden kann.

Der US-A-4.092.669 ist eine Vorrichtung zum Messen von Abständen in Bildern zu entnehmen. Hierzu wird das zu messende Bild zwischen Glasplatten fixiert, die zu einer oberhalb des Bildes angeordneten Videokamera verstellt werden. Ein Koordinatenmessgerät mit Belenchtungseinrichtung ist der DE-U-88 02 791 zu entnehmen. Die Belenchzungseinrichtung umfasst einen unter einer transparenten Platte 6 angeordneten Beleuchtungskörper. Auf die transparente Platte ist ein Messkörper positionierbar, der über einen über den Körper verfahrbaren Messkopt mit kamera messbar ist.

Der vorliegenden Erfindung liegt die Aufgabe zu Grunde, eine Anordnung und ein Verfahren der eingangs genannten Art so weiterzubilden, dass mit hoher Messgenauigkeit überaus schnell zweidimensionale Objekte bzw. deren Geometrien, insbesondere Objektkanten und -ecken und -ränder gemessen werden können.

Die Aufgabe wird gelöst durch ein Koordinatenmessgerät zum Messen von Geometrien bzw. Strukturen von im Wesentlichen zweidimensionalen Objekten, umfassend:
- eine Objektauflagefläche, auf welcher ein Objekt anordbar ist,
- eine als flächiges Leuchtfeld ausgeführte und oberhalb der Objektauflagefläche angeordnete Beleuchtungseinrichtung,
- eine ausschließlich unterhalb der Objektauflagefläche angeordnete Bildverarbeitungssensorik.
- dem Bildverarbeitungssensor zugeordnete X-/Y-Antriebe zur Verstellung der Position der Bildverarbeitungssensorik,
- Maßstabsysteme zur Messung der Position der Bildverarbeitungssensorik,
- ein geschlossenes Gehäuse mit einem geschlossenen unteren Teil und einem Deckel, wobei im unteren Teil die Bildverarbeitungssensorik und die X-/Y-Antriebe angeordnet sind.

Insbesondere ist das Gehäuse objektseitig über eine durchsichtige Fläche abgeschlossen auf der das Objekt auflegbar ist. Setbstverständlich besteht auch die Möglichkeit, das Objekt auf einem gesonderten Objekttisch beabstandet zu der durchsichtigen Fläche anzuordnen.

Es ist vorgesehen, dass die Anordnung ein Gehäuse mit einem geschlossenen unteren Teil und einem Deckel umfasst. Das geschlossene untere Teil enthält die Sensorik mit Optik sowie Antrieb und ist deckelseitig mit einer durchsichtigen Abdeckung wie Glasplatte versehen, auf die das zu messende Objekt positionierbar ist. Der Deckel selbst weist die Beleuchtungseinrichtung auf, wobei eine Messung erst dann erfolgen kann, wenn der Deckel den unteren Teil des Gehäuses abdeckt, also abschließt. Somit ist das Objekt beim Messen voll umfangsseitig von dem Gehäuse, also dem Gehäuseunterteil und dem Deckel umgeben, so dass ein unbeabsichtigtes Verrücken des Objektes oder sonstige die Messung beeinflussende Veränderungen nicht erfolgen können.

Des Weiteren kann vorgesehen sein, dass das Objekt konzentrisch von in Richtung des Objekts abstrahlenden Lichtquellen wie Leuchtdioden umgeben ist, um das Objekt sensorseitig zu beleuchten.

Als Abbildungsoptik für den Bildverarbeitungssensor kann ein telezentrisches Objektiv mit großer Schärfentiefe verwendet werden. Die Schärfentiefe kann z. B. 50 mm betragen, ohne dass hierdurch eine Einschränkung erfolgt.

Die Position des Bildverarbeitungssensors ist mit diesem zugeordneten XY-Antrieben verstellbar, wobei die Position durch entsprechende Maßstabsysteme messbar ist.

An den Bildverarbeitungssensor kann ein Bildspeicher angeschlossen sein, der die Größe eines gewünschten, insbesondere des gesamten Messbereichs des Gerätes repräsentiert. Ferner kann dem Bildspeicher für den Messbereich, insbesondere gesamten Messbereich eine Auswerterecheneinheit zugeordnete sein, die die geometrische Auswertung am gesamten Bildinhalt vornimmt.

Bevorzugterweise umfasst die Bildverarbeitungssensorik matrixförmige Bildverarbeitungssensoren und ist als CCD-Matrixkamera ausgebildet.

Gegenstand der Erfindung ist auch ein Verfahren zum Messen von Kanten. Ecken und/oder Rändern von einem im Wesentlichen zweidimensionalen Objekt mittels eines Koordinatenmessgerätes unter Verwendung einer Bildverarbeitungssensorik, mit den Maßnahmen des Anspruchs 9.

Es ist vorgesehen, dass an mehreren Positionen des Messbereichs Bilder aufgenommen werden und diese rechnerisch im Bildspeicher zu einem Gesamtbild zusammengesetzt werden. Auch besteht die Möglichkeit, über den gesamten Messbereich verteilt Bilder aufzunehmen und diese zu einem Gesamtmessbild zusammenzufügen. Dabei kann das Gesamtbild hinsichtlich geometrischer Merkmale mit einem Bildverarbeitungssystem ausgewertet werden. Zum Beispiel kann das Sehfeld des Sensors 50 x 80 mm² und der Messbereich 400 x 200 mm² betragen, um nur beispielhaft Zahlen zu nennen.

Durch die erfindungsgemäße Lehre wird es ermöglicht, die dem Stand der Technik immanenten Nachteile zu reduzieren bzw, zu vermeiden. Dies geschieht erfindungsgemäß dadurch, dass die bewegte Bildverarbeitungssensorik unterhalb des Objekts und z. B. unterhalb einer Glasplatte mit Blickrichtung auf das Objekt - also nach oben - angeordnet wird. Dies führt dazu, dass die messenden Objektbereiche wie -kanten der Messobjckte unabhängig von der Dicke jeweils in der gleichen Ebene zum Liegen kommen. Ein Schartstellen der Sensorik ist somit nicht erforderlich.

Ferner wird durch den erfindungsgemäßen Einsatz einer Optik mit ausreichender Schärfentiefe ermöglicht, dass selbst stufige Teile ohne Fokussiervorgang in einer Lage gemessen werden können.

Zur Messzeitoptimierung werden erfindungsgemäß wahlweise das gesamte Messfeld oder Ausschnitte des Messfeldes durch Aneinanderreihen von Positionen des Bildverarbeitungssensors abgerastert. Hieraus wird virtuell im angeschlossenen Bildverarbeilungsrechner ein Gesamtbild erzeugt. Die messtechnische Auswertung erfolgt im Gesamtbild in einem Zug. Es werden somit Positioniervorgänge gespart und ein Gesamtüberblick über das zu messende Objekt gewonnen.

Auch Ausschnitte des Messfeldes selbst können als Teilgesamtmessbild dargestellt und sodann mit einem Bildverarbeitungssystem ausgewertet werden.

Insbesondere werden die Nachteile des Standes der Technik durch die genaue Positionierung von matrixförmigen Bildverarbeitungssensoren vermieden.

Bevorzugterweise ist vorgesehen, dass zur Erfassung des Objektes bzw. Bereiche dieses eine Optik mit veränderlichen Arbeitsabstand benutzt wird. Insbesondere kann jedoch ein optisches System verwendet werden, das eine Zoom-Optik aufweist, die wenigstens zwei axial jeweils separat motorisch verschiebbare Linsengruppen enthält. Insoweit wird auf die WO 99/53268 verwiesen, auf deren Offenbarung ausdrücklich Bezug genommen wird.

In Weiterbildung der Erfindung ist vorgesehen, dass zunächst ein grobes Ausrichten des Bildverarbeitungssensors auf die zu messende Position des Objektes bzw. Teil des Objektes erfolgt, wobei beim Ausrichten des Bildverarbeitungssensors dieser mit einer Beschleunigung a₁ > 0 mm/s² bewegt wird, um sodann den Bildverarbeitungssensor abzubremsen und die Position bei bewegtem Bildverarbeitungssensor bei einer Beschleunigung a₂ mit 0 mm s₂ ≤ a₂ < a₁ zu messen. Dabei kann gegebenenfalls das Objekt zusätzlich mit einem Lichtblitz beaufschlagt werden bzw. als Bildverarbeitungssensor wird eine CCD-Kamera mit Shutter verwendet. Durch diesbezügliche Maßnahmen erfolgt eine Korrelation zwischen Bewegung des Sensors und jeweils aufzunehmendem Bild, wobei durch den Lichtblitz bzw. den Shutter ein scheinbares Anhalten des Bildverarbeitungssensors realisiert wird mit der Folge, dass Messungen so durchgerührt werden, als wenn der Bildverarbeitungssensor während der Messung stillstehen würde.

Weitere Einzelheiten, Vorteile und Merkmale der Erfindung ergeben sich nicht nur aus den Ansprüchen, den diesen zu entnehmenden Merkmalen - für sich und/oder in Kombination -, sondem auch aus der nachfolgenden Beschreibung von der Zeichnung zu entnehmenden bevorzugten Ausführungsbeispielen.

Es zeigen:
- Fig. 1: eine Prinzipdarstellung einer Anordnung zum Messen eines zweidimensionalen Objektes,
- Fig. 2a + 2b: eine Prinzipdarstellung einer ersten Ausführungsform eines Messverfahrens und
- Fig. 3a + 3b: eine Prinzipdarstellung einer zweiten Ausführungsform eines Messverfahrens.

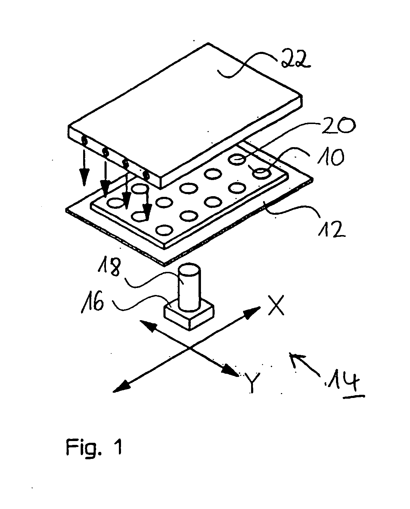

In Fig. 1 ist rein prinzipiell eine Anordnung zum Messen eines im Wesentlichen zweidimensionalen Objektes 10 dargestellt, das auf einer Objektauflagefläche 12 angeordnet ist. Diese ist erfindungsgemäß durchsichtig und insbesondere als Glasplatte ausgebildet, um das Objekt 10 von der Unterseite her messen zu können. Unterhalb der Objektauflagefläche 12 ist eine Bildverarbeitungssensorik 14 in X- und Y-Richtung eines Koordinatenmessgerätes verstellbar angeordnet. Die Bildverarbeitungssensorik besteht bevorzugterweise aus einer CCD-Matrixkamera 16, der eine Optik 18 insbesondere in Form eines telezentrischen Objektivs mit großer Schärfentiefe vorgeordnet ist.

Dabei kann die Objektauflagefläche 12 Fläche eines Gehäuses sein, in dem die Bildverarbeitungssensorik 14 in X- und Y-Richtung zu dem Objekt 10 verstellbar ist. Die Gehäusefläche ist dabei durchsichtig, wobei auf der Gehäusefläche entweder unmittelbar das Objekt 10 aufliegt oder in äquidistantem Abstand zu dieser angeordnet ist.

Dadurch, dass die bewegte Bildverarbeitungssensorik 14 unterhalb des Objekts 10 und unterhalb der insbesondere als Glasplatte ausgebildeten Objektauflagefäche 12 mit Blickrichtung auf das Objekt 10 angeordnet ist, ist bei hinreichender Schärfentiefe des Objekts 18 ein Scharfstellen der Sensorik 16 nicht mehr erforderlich, da die zu messenden Objektbereiche wie im Ausführungsbeispiel Kanten von Bohrungen 20 unabhängig von der Dicke des Objekts 10 in der gleichen Ebene zum Liegen kommen, nämlich auf der Objektauflagefläche 12, die unabhängig von der Position der Bildverarbeitungssensorik 14 zu dieser einen gleichbleibenden Abstand aufweist.

Ist im Ausführungsbeispiel das Objektiv 10 unmittelbar auf einer Glasplatte angeordnet, so besteht selbstverständlich auch die Möglichkeit, das Objekt 10 beabstandet zu dieser, jedoch in äquidistantem Abstand anzuordnen.

Zum Beleuchten des Objektes ist oberhalb von diesem, also in Bezug auf die Bildverarbeitungssensorik 14 auf der gegenüberliegenden Seite des Objekts 10 eine Beleuchtung in Form eines flächigen Leuchtfeldes 22 vorgesehen.

Dabei sollte das flächige Leuchtfeld in einem Deckel integriert sein, der das Gehäuse verschließt, in dem die Bildverarbeitungssensorik 14 mit der Optik 18 und dem Antrieb angeordnet ist und das beleuchtungsfeldseitig durch ein durchsichtiges Element wie Glasplatte verschlossen ist, auf die das zu messende Objekt positionierbar ist. Dabei ist üblicherweise eine Messung nur dann durchzuführen, wenn der das Leuchtfeld 22 enthaltende Deckel das Gehäuse vollständig abdeckt, also glasplattenseitig verschließt.

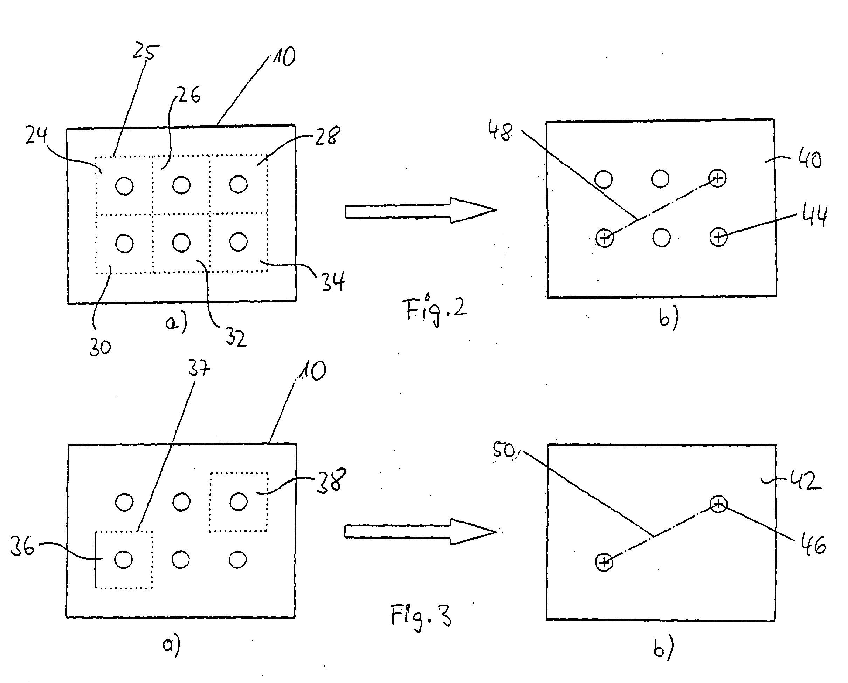

Um mit hoher Geschwindigkeit präzise Messungen durchzuführen, ist erfindungsgemäß vorgesehen, dass die Bildverarbeitungssensorik 14 an mehreren Positionen 24, 26, 28, 30, 32, 34, 36, 38 des zu messenden Bereichs des Objekts 10 Bilder aufnimmt, die in den Fig. 2a und 3a grundsätzlich dem jeweiligen Sehfeld 25, 37 der Bildverarbeitungssensorik 14 entsprechen und durch von gestrichelten Linien umrahmte Quadrate repräsentiert werden, um die jeweiligen Bilder sodann rechnerisch in einem Bildspeicher zu einem Gesamtbild gemäß Fig. 2b oder bei verteilt aufgenommenen Bildern (Fig. 3a) diese zu einem Gesamtmesssbild gemäß Fig. 3b zusammenzufügen. Aus dem jeweiligen Gesamtbild 40 bzw. 42 können sodann geometrische Merkmale wie Position eines Messortes 44, 46 oder Abstand 48, 50 der Messpunkte bzw. Messorte ausgewertet werden. Das Sehfeld 24, 25, 26, 28, 30, 32, 34, 36, 37, 38 kann z. B. eine Größe von 50 x 80 mm² und der Messbereich 400 x 200 mm² betragen, ohne dass dies einschränken zu verstehen ist.

Mit anderen Worten werden zur Messzeitoptimierung erfindungsgemäß wahlweise das gesamte Messfeld (Fig. 2a) oder Ausschnitte des Messfeldes (Fig. 3a) durch Aneinanderreihen von Positionen des Bildverarbeitungssensors wie Matrix-CCD-Kamera 16 abgerastert. Hieraus wird virtuell in einem angeschlossenen Bildverarbeitungsrechner ein Gesamtbild 40, 42 erzeugt, wobei die messtechnische Auswertung im Gesamtbild in einem Zug erfolgt. Somit werden Positioniervorgänge gespart und ein Gesamtüberblick über das zu messende Objekt 10 gewonnen. Durch diese Maßnahmen werden die Nachteile des Standes der Technik durch die notwendige genaue Positionierung von matrixformigen Bildverarbeitungssensoren vermieden.

Unabhängig hiervon kann das Messverfahren dadurch optimiert werden, dass zunächst ein grobes Ausrichten des Bildverarbeitungssensors auf zu messende Position des Objektes erfolgt, wobei beim Ausrichten des Bildverarbeitungssensors dieser mit einer Beschleunigung a₁ > 0 mm/s² bewegt wird, um sodann den Bildverarbeitungssensor abzubremsen und die Position bei bewegtem Bildverarbeitungssensor mit einer Beschleunigung a₂ mit 0 mm/s² ≤ a₂ < a₁ gemessen wird. Dabei kann ein Bildverarbeitungssensor in Form einer CCD-Kamera mit Shutter venvendet werden, wodurch sich der Vorteil ergibt, dass beim Messen ungeachtet der Bewegung des Sensors ein scheinbares Anhalten dieses erfolgt. Gleiches kann mit einem Lichtblitz realisiert werden.

Mit anderen Worten wird der Bildverarbeitungssensor nur grob auf die zu messende Position bewegt und dann bei weiterhin bewegten, jedoch grundsätzlich nicht beschleunigtem Bildverarbeitungssensor, der mit einer Geschwindigkeit von v₁ von z. B. 50 bis 200 mm/s bewegt werden kann, zu messen. Dabei kann das zum Messen erforderliche Bildspeichern im Bildverarbeitungssensor durch Erreichen eines Zielbereichs erkannt werden. So kann das Abbremsen durch optisches Erfassen von die Position enthaltenden Bereichs des Objekts mittels des Bildverarbeitungssensors eingeleitet werden.

Dabei kann eine Bewegung des Bildverarbeitungssensors derart erfolgen, dass bei der Geschwindigkeit von v₁ das Objekt bzw. Messbereich oder Messpunkte dieses gemessen werden, anschließend der Bildverarbeitungssensor stark beschleunigt wird, z. B. auf einen Wert von in etwa 5000 bis 15 000 mm/s, um sodann bei einer Beschleunigung 0 mm/s² bei einer Geschwindigkeit von v₂ zwischen 400 und 600 mm/s auf den Messbereich bzw. Messpunkt grob ausgerichtet zu werden. Sodann erfolgt ein Abbremsen des Bildverarbeitungssensors auf die Geschwindigkeit v₁ im Bereich zwischen vorzugsweise 50 mm/s und 150 mm/s, um zu messen. Während dieser Zeit kann das Objekt bzw. der zu messende Bereich mit Lichtblitzen beaufschlagt werden bzw. der Shutter des Bildverarbeitungssensors in der gewünschten Frequenz geöffnet und geschlossen werden. Nach erfolgter Messung wird sodann der Bildverarbeitungssensor im zuvor beschriebenen Sinne beschleunigt, um auf einen neuen Messpunkt bzw. -bereich ausgerichtet zu werden.

## Patentansprüche

1. Koordinatenmessgerät zum Messen von Geometrien bzw. Strukturen von im Wesentlichen zweidimensionalen Objekten (10), umfassend:
- eine Objektauflagefläche (12), auf welcher ein Objekt anordbar ist,
- eine als flächiges Leuchtfeld ausgeführte und oberhalb der Objektauflagefläche (12) angeordnete Beleuchtungseinrichtung (22),
- eine einzige ausschließlich unterhalb der Objektauflagefläche (12) angeordnete Bildverarbeitungssensorik (14),
- der Bildverarbeitungssensorik (14) zugeordnete X-/Y-Antriebe zur Verstellung der Position der Bildverarbeitungssensorik (14),
- Maßstabsysteme zur Messung der Position der Bildverarbeitungssensorik (14),
- ein geschlossenes Gehäuse mit einem geschlossenen unteren Teil und einem Deckel, wobei im unteren Teil die Bildverarbeitungssensorik und die X-/Y-Antriebe angeordnet sind.

2. Anordnung nach Anspruch 1,
**dadurch gekennzeichnet,**
**dass** die Bildverarbeitungssensorik (14) matrixförmige Bildverarbeitungssensoren umfasst, insbesondere eine CCD-Matrix-Kamera (16) ist.

3. Anordnung nach Anspruch 1,
**dadurch gekennzeichnet,**
**dass** das Gehäuse objektseitig transparent bzw. durchsichtig ist und die Objektauflagefläche (12) ist oder zu der die Objektauflagefläche parallel verläuft.

4. Anordnung nach Anspruch 1,
**dadurch gekennzeichnet,**
**dass** die Beleuchtungseinrichtung (22) in einem das Gehäuse objektauflageflächenseitig verschließenden Deckel integriert ist.

5. Anordnung nach zumindest einem der vorhergehenden Ansprüche,
**dadurch gekennzeichnet,**
**dass** als Abbildungsoptik (18) der Bildverarbeitungssensorik (14) ein telezentrisches Objektiv mit großer Schärfentiefe verwendet ist.

6. Anordnung nach Anspruch 5,
**dadurch gekennzeichnet,**
**dass** die Abbildungsoptik (18), vorzugsweise konzentrisch, von Beleuchtungselementen, wie Leuchtdioden, zum Beleuchten bildverarbeitungssensorikseitiger Fläche des Objekts (10) umgeben ist.

7. Anordnung nach zumindest Anspruch 1,
**dadurch gekennzeichnet,**
**dass** an die Bildverarbeitungssensorik (14) ein Bildspeicher angeschlossen ist, der die Größe eines gewünschten Messbereichs (40, 42), insbesondere des gesamten Messbereiches der Anordnung, repräsentiert.

8. Anordnung nach Anspruch 7,
**dadurch gekennzeichnet,**
**dass** dem Bildspeicher für den Messbereich eine Auswerterecheneinheit zugeordnet ist, die die geometrische Auswertung am gesamten Bildinhalt vornimmt.

9. Verfahren zum Messen von Kanten, Ecken und/oder Rändern von einem im Wesentlichen zweidimensionalen Objekt mittels eines Koordinatenmessgerätes unter Verwendung einer Bildverarbeitungssensorik (14),
wobei das zu messende Objekt auf einer Objektauflagefläche (12) angeordnet wird, oberhalb der eine als flächiges Leuchtfeld ausgeführte Beleuchtungseinrichtung (22) angeordnet ist,
wobei die Position der einzigen ausschließlich unterhalb der Objektauflagefläche (12) angeordneten Bildverarbeitungssensorik (14) in einer parallel zur Objektauflagefläche (12) verlaufenden Ebene mittels X-/Y-Antrieben des Koordinatenmessgerätes verstellt und die Position durch entsprechende Maßstabsysteme gemessen wird, und wobei mittels der Bildverarbeitungssensorik (14) an mehreren Positionen (24, 26, 28, 30, 32, 34, 36, 38) des Messbereichs Bilder aufgenommen und diese rechnerisch in einem an der Bildverarbeitungssensorik (14) angeschlossenen Bildspeicher zu einem Gesamtbild (40, 42) zusammengesetzt werden, wobei die Bildverarbeitungssensorik und die X-/Y-Antriebe in einem unteren geschlossenen Teil eines Gehäuses angeordnet werden, das einen Deckel aufweist.

10. Verfahren nach Anspruch 9,
**dadurch gekennzeichnet,**
**dass** dem Bildspeicher für den gewünschten bzw. gesamten Messbereich eine Auswerterecheneinheit zugeordnet wird, die die geometrische Auswertung am Bildinhalt, insbesondere am gesamten Bildinhalt, vornimmt.

11. Verfahren nach zumindest Anspruch 9,
**dadurch gekennzeichnet,**
**dass** über den gesamten Messbereich verteilt Bilder (24, 26, 28, 30, 32, 34, 36, 38) aufgenommen und diese zu einem Gesamtmessbild (40, 42) zusammengefügt werden.

12. Verfahren nach zumindest Anspruch 9,
**dadurch gekennzeichnet,**
**dass** das Gesamtbild (40, 42) hinsichtlich geometrischer Merkmale mit einem Bildverarbeitungssystem ausgewertet wird.

13. Verfahren nach zumindest Anspruch 9,
**dadurch gekennzeichnet,**
**dass** bei bewegter Bildverarbeitungssensorik (14) das Objekt (10) oder ein Bereich des Objekts gemessen wird.

14. Verfahren nach zumindest Anspruch 13,
**dadurch gekennzeichnet,**
**dass** zum Messen des Objektes (10) oder eines Bereiches des Objektes folgende Verfahrensschritte durchgeführt werden:
- grobes Ausrichten der Bildverarbeitungssensorik (14) auf zu messende Position des Objekts (10), wobei beim Ausrichten der Bildverarbeitungssensorik diese mit einer Beschleunigung a₁ > 0 mm/s² bewegt wird und
- Abbremsen der Bildverarbeitungssensorik in messender Position bei bewegter Bildverarbeitungssensorik bei einer Beschleunigung a₂ mit 0 mm/s² ≤ a₂ <a₁.

15. Verfahren nach zumindest Anspruch 13,
**dadurch gekennzeichnet,**
**dass** das Objekt (10) während der Messung mit einem Lichtblitz beaufschlagt oder als Bildverarbeitungssensor (16) der Bildverarbeitungssensorik (14) eine CCD-Kamera mit Shutter verwendet wird.

16. Verfahren nach zumindest Anspruch 13,
**dadurch gekennzeichnet,**
**dass** eine Abbildungsoptik mit veränderlichem Arbeitsabstand, insbesondere eine Abbildungsoptik mit einer Zoomoptik, verwendet wird, die wenigstens zwei axial jeweils separat motorisch verschiebbare Linsengruppen enthält.

17. Verfahren nach zumindest Anspruch 9,
**dadurch gekennzeichnet,**
**dass** das Gehäuse objektseitig durch eine durchsichtige Fläche abgeschlossen ist, auf der das Objekt (10) aufgelegt oder zu der das Objekt beanstandet auf einer zu der Fläche parallel verlaufenden Ebene angeordnet wird.

18. Verfahren nach Anspruch 9,
**dadurch gekennzeichnet,**
**dass** die Beleuchtungseinrichtung (22) in dem Deckel integriert wird, über den das Gehäuse abgedeckt wird und wobei bei die Objektauflagefläche (12) freigebendem Deckel ein Messen des Objektes (10) unterbunden wird.

19. Verfahren nach zumindest Anspruch 9,
**dadurch gekennzeichnet,**
**dass** die Bildverarbeitungssensorik (14) als Abbildungsoptik (18) mit einem telezentrischen Objektiv mit großer Schärfentiefe verwendet wird.

## Claims

1. Coordinate measuring device for measuring geometries, respectively structures of basically two-dimensional objects (10), comprising:
- an object-bearing surface (12), on which an object is placeable,
- an illumination apparatus (22), designed as area-extening luminous field and arranged above the object-bearing surface (12),
- a single image processing sensor system (14) arranged exclusively beneath the object-bearing surface (12),
- X-/Y-drives allocated to the image processing sensor system (14) for shifting the position of the image processing sensor system (14),
- scale systems for measuring the position of the image processing sensor system (14),
- a closed housing with a closed lower part and a cover, with the image processing sensor system and the X-/Y-drives being arranged in said lower part.

2. Arrangement according to claim 1,
**characterized in**
**that** the image processing sensor system (14) comprises matrix-like image processing sensors, is especially a CCD matrix camera (16).

3. Arrangement according to claim 1,
**characterized in**
**that** the housing is transparent, respectively translucent on the object side and is the object-bearing surface (12) or runs parallel to the object-bearing surface.

4. Arrangement according to claim 1,
**characterized in**
**that** the illumination apparatus (22) is incorporated into a cover closing the housing on the object-bearing surface side.

5. Arrangement according to at least one of the preceding claims,
**characterized in**
**that** as the imaging optical system (18) of the image processing sensory system (14) is used a telecentric objective with great depth of field.

6. Arrangement according to claim 5,
**characterized in**
**that** the imaging optical system (18) is surrounded, preferably concentrically, by illumination elements such as light diodes for illumination of the surface of the object (10) at image processing sensor side.

7. Arrangement according to at least claim 1,
**characterized in**
**that** an image memory is connected to the image processing sensor system (14) that represents the magnitude of a desired measuring region (40, 42), especially the overall measuring region of the arrangement.

8. Arrangement according to claim 7,
**characterized in**
**that** an evaluation computer unit is allocated to the image memory for the measurement region which performs the geometrical evaluation of the overall image content.

9. Method for measuring edges, angles and/or margins of a basically two-dimensional object with a coordinate measuring device using an image processing sensor system (14),
whereby the object to be measured is arranged on an object-bearing surface (12), above which is arranged an illumination apparatus (22) designed as area-extending luminous field,
whereby the position of the single image processing sensor system (14), arranged exclusively beneath the object-bearing surface (12), is shifted in a plane running parallel to the object-bearing surface (12) by X-/Y-drives of the coordinate measuring system and the position is measured by corresponding scale systems, and whereby by means of the image processing sensor system (14) images are taken at several positions (24, 26, 28, 30, 32, 34, 36, 38) of the measuring range and are composed by computer to an overall image (40, 42) in an image memory connected to the image processing sensor system (14), whereby the image processing sensor system and the X-/Y-drives are arranged in a lower closed part of a housing having a cover.

10. Method according to claim 9,
**characterized in**
**that** an evaluation computer unit is allotted to the image memory for the desired, respectively total measuring range which performs the geometric evaluation of the image content, especially the entire image content.

11. Method according to at least claim 9,
**characterized in**
**that** images (24, 26, 28, 30, 32, 34, 36, 38) are recorded distributed over the entire measuring region and are matched into an overall measurement image (40, 42).

12. Method according to at least claim 9,
**characterized in**
**that** the overall image (40, 42) is evaluated with respect to geometrical features with an image processing system.

13. Method according to at least claim 9,
**characterized in**
**that** with the image processing sensor system (14) being moved the object (10) or a region of the object is measured.

14. Method according to at least claim 13,
**characterized in**
**that** the following method steps are performed for measuring the object (10) or a region of the object:
- crude aligning of the image processing sensor system (14) on positions of the object (10) to be measured, whereby when aligning the image processing sensor, this is moved with an acceleration a₁ > 0 mm/s², and
- braking the image processing sensor system in measuring position when the image processing sensor system is moved at an acceleration a₂ with 0 mm/s² ≤a²<a₁.

15. Method according to at least claim 13,
**characterized in**
**that** the object (10) is acted upon with a light flash during measurement or a CCD camera with shutter is used as image processing sensor (16) of the image processing sensor system (14).

16. Method according to at least claim 13,
**characterized in**
**that** an imaging optical system with variable working distance, especially an imaging optical system with a zoom optical system, is used that contains at least two lens groups each being axially and separately displaceable by a motor.

17. Method according to at least claim 9,
**characterized in**
**that** at the object side the housing is limited by a translucent surface, onto which the object (10) is arranged or to which the object is arranged at a distance on a plane running parallel to the surface.

18. Method according to claim 9,
**characterized in**
**that** the illumination apparatus (22) is incorporated in the cover via which the housing is covered and whereby a measurement of the object (10) is prevented with the cover clearing the object-bearing surface (12).

19. Method according to at least claim 9,
**characterized in**
**that** the image processing sensor system (14) is used as imaging optical system (18) with a telecentric objective with great depth of field.

## Revendications

1. Appareil de mesure de coordonnées destiné à mesurer des géométries ou des structures d'objets essentiellement bidimensionnels (10), comprenant :
- une surface d'appui d'objet (12), sur laquelle un objet peut être disposé,
- un dispositif d'éclairage (22) conçu comme un champ lumineux plan et disposé au-dessus de la surface d'appui d'objet (12),
- une seule technique sensorielle de traitement d'images (14) disposée exclusivement au-dessous de la surface d'appui d'objet (12),
- des entraînements X/Y affectés à la technique sensorielle de traitement d'images (14) pour modifier la position de la technique sensorielle de traitement d'images (14),
- des systèmes de mesure linéaires pour mesurer la position de la technique sensorielle de traitement d'images (14),
- un boîtier fermé avec une partie inférieure fermée et un couvercle, sachant que la technique sensorielle de traitement d'images et les entraînements X/Y sont disposés dans la partie inférieure.

2. Dispositif selon la revendication 1,
**caractérisé en ce**
**que** la technique sensorielle de traitement d'images (14) comprend des capteurs de traitement d'images en forme de matrice, et est en particulier une caméra matricielle CCD (16).

3. Dispositif selon la revendication 1,
**caractérisé en ce**
**que** le boîtier est transparent du côté objet et constitue la surface d'appui d'objet (12) ou que la surface d'appui d'objet s'étend parallèlement à celui-ci.

4. Dispositif selon la revendication 1,
**caractérisé en ce**
**que** le dispositif d'éclairage (22) est intégré dans un couvercle fermant le boîtier du côté de la surface d'appui d'objet.

5. Dispositif selon au moins l'une des revendications précédentes,
**caractérisé en ce**
**qu'**un objectif télécentrique possédant une grande profondeur de champ est utilisé en tant qu'optique de reproduction (18) de la technique sensorielle de traitement d'images (14).

6. Dispositif selon la revendication 5,
**caractérisé en ce**
**que** l'optique de reproduction (18) est, de préférence de manière concentrique, entourée d'éléments d'éclairage, tels que des diodes lumineuses, pour éclairer la surface de l'objet (10) se trouvant du côté de la technique sensorielle de traitement d'images.

7. Dispositif selon au moins la revendication 1,
**caractérisé en ce**
**qu'**est connectée à la technique sensorielle de traitement d'images (14), une mémoire image qui représente la taille d'une plage de mesure souhaitée (40, 42), en particulier toute la plage de mesure du dispositif.

8. Dispositif selon la revendication 7,
**caractérisé en ce**
**qu'**est affectée à la mémoire image pour la plage de mesure une unité de calcul d'évaluation qui procède à l'évaluation géométrique sur tout le contenu de l'image.

9. Procédé destiné à mesurer des arêtes, des coins et/ou des bords d'un objet essentiellement bidimensionnel au moyen d'un appareil de mesure de coordonnées en utilisant une technique sensorielle de traitement d'images (14), sachant que l'objet à mesurer est disposé sur une surface d'appui d'objet (12), au-dessus de laquelle est disposé un dispositif d'éclairage (22) conçu comme un champ lumineux plan,
sachant que la position de l'unique technique sensorielle de traitement d'images (14) disposée exclusivement au-dessous de la surface d'appui d'objet (12) est modifiée sur un plan s'étendant parallèlement à la surface d'appui d'objet (12) au moyen d'entraînements X/Y de l'appareil de mesure de coordonnées et que la position est mesurée par des systèmes de mesure linéaire correspondants, et sachant que des images sont prises à plusieurs positions (24, 26, 28,30, 32, 34, 36, 38) au moyen de la technique sensorielle de traitement d'images (14) et que ces images sont assemblées arithmétiquement en une image d'ensemble (40, 42) dans une mémoire image connectée à la technique sensorielle de traitement d'images (14), et sachant que la technique sensorielle de traitement d'images et les entraînements X/Y sont disposés dans une partie inférieure fermée d'un boîtier présentant un couvercle.

10. Procédé selon la revendication 9,
**caractérisé en ce**
**qu'**est affectée à la mémoire image pour la plage de mesure souhaitée ou toute la plage de mesure une unité de calcul d'évaluation qui procède à l'évaluation géométrique sur le contenu de l'image, en particulier sur le contenu de l'image dans son ensemble.

11. Procédé selon au moins la revendication 9,
**caractérisé en ce**
**que** des images (24, 26, 28, 30, 32, 34, 36, 38) sont prises sur toute la plage de mesure et assemblées en une image de mesure d'ensemble (40, 42).

12. Procédé selon au moins la revendication 9,
**caractérisé en ce**
**que** l'image d'ensemble (40, 42) est évaluée sur la base de ses caractéristiques géométriques par un système de traitement d'images.

13. Procédé selon au moins la revendication 9,
**caractérisé en ce**
**que** l'objet (10) ou une partie de l'objet est mesuré(e) par une technique sensorielle de traitement d'images (14) en mouvement.

14. Procédé selon au moins la revendication 13,
**caractérisé en ce**
**que**, pour mesurer l'objet (10) ou une partie de l'objet, les étapes suivantes sont réalisées :
- orientation grossière de la technique sensorielle de traitement d'images (14) sur la position à mesurer de l'objet (10), sachant que lors de l'orientation de la technique sensorielle de traitement des images, celle-ci est déplacée à une accélération a₁> 0 mm/s², et
- freinage de la technique sensorielle de traitement d'images dans la position à mesurer avec une technique sensorielle de traitement d'images en mouvement à une accélération a₂ de 0 mm/s² ≤ a₂ <a₁.

15. Procédé selon au moins la revendication 13,
**caractérisé en ce**
**que** l'objet (10) est exposé à un flash lumineux pendant la mesure ou qu'une caméra CCD avec obturateur est utilisée en tant que capteur de traitement d'images (16) de la technique sensorielle de traitement d'images (14).

16. Procédé selon au moins la revendication 13,
**caractérisé en ce**
**qu'**est utilisée une optique de représentation avec distance de travail réglable, en particulier une optique de représentation avec optique à zoom, qui comprend au moins deux groupes de lentilles pouvant être déplacés axialement par moteur, indépendamment l'un de l'autre.

17. Procédé selon au moins la revendication 9,
**caractérisé en ce**
**que** le boîtier est terminé du côté objet par une surface transparente sur laquelle l'objet (10) est posé ou par rapport à laquelle l'objet est disposé à distance sur un plan s'étendant parallèlement à la surface.

18. Procédé selon la revendication 9,
**caractérisé en ce**
**que** le dispositif d'éclairage (22) est intégré dans le couvercle qui recouvre le boîtier, et sachant que si le couvercle ne recouvre pas la surface d'appui d'objet (12), une mesure de l'objet (10) est interdite.

19. Procédé selon au moins la revendication 9,
**caractérisé en ce**
**que** la technique sensorielle de traitement d'images (14) utilise en tant qu'optique de représentation (18) un objectif télécentrique possédant une grande profondeur de champ.
